# EUROPÄISCHE PATENTANMELDUNG

(11) **EP 0 684 574 A2**
(43) Veröffentlichungstag der Anmeldung: **29.11.1995**
(21) Anmeldenummer: 95107480.6
(22) Anmeldetag: 16.05.1995
(51) Int. Cl.: G06F 17/60

(54) **Verfahren und Service-Personalcomputer zum Administrieren und Warten von Kommunikationssystemen**

(30) Priorität: 25.05.1994 DE 4418208
(71) Anmelder: SIEMENS AKTIENGESELLSCHAFT, D-80333 München (DE)
(72) Erfinder: Kaufel, Wolfgang, Dipl.-Math, D-14167 Berlin (DE); Vogt-Wingerath, Christine, Dipl.-Math., D-14057 Berlin (DE)

(57) **Zusammenfassung**

Durch eine Initialisierung eines Kommunikationsaustausches zwischen einem Kommunikationssystem (KS) und einem angeschlossenen Service-Personalcomputer (SPC) werden kommunikationsspezifische Informationen (ksi) abgefragt, mit deren Hilfe im Service-Personalcomputer (SPC) nach einer Auswahl eines Administrationsauftrages (AA) der vorgesehene Stapel (AMS) von betriebstechnischen Anweisungen (amo) bestimmt und die einzufügenden betriebstechnischen Parameter (P) bedieneroberflächengesteuert abgefragt werden. Die mit betriebstechnischen Parametern (P) versehenen, einen Auftragsstapel (AS) bildenden betriebstechnischen Anweisungen (amo) werden sukzessive an das Kommunikationssystem (KS) gesteuert und eine als Reaktion vom Kommunikationssystem (KS) übertragene Antwortinformationen (ai) interpretiert, bewertet und visualisiert. Durch das erfindungsgemäße Verfahren ist ein Service-Personalcomputer (SPC) zum Administrieren und Warten unterschiedlicher Kommunikationssysteme (KS) mit unterschiedlichen Ausbau-und Programmversionen realisierbar.

## Beschreibung

Das Warten und Administrieren, d.h. Verwalten, von Kommunikationssystemen wird bekannterweise durch betriebstechnische Anweisungen bzw. Befehle bewirkt. In diese betriebstechnischen Anweisungen sind betriebstechnische Parameter eingefügt, die jeweils den Bezug zu den zu administrierenden Komponenten des Kommunikationssystems herstellen. Durch Eingaben mehrerer derartiger betriebstechnischer Anweisungen, beispielsweise über eine Bedieneinrichtung eines Kommunikationssystems können beispielsweise Teilnehmeranschlüsse gelöscht oder neu eingerichtet werden. Die betriebstechnischen Anweisungen werden in dem jeweiligen Kommunikationssystem, d.h. unmittelbar nach der Eingabe, bearbeitet.

Desweiteren ist aus der Druckschrift "Digitale Vermittlungssysteme für Fernsprechen und ISDN", Altehage, 1991, Seite 322 bis 332, bekannt, mit Hilfe einer Formular- bzw. Maskentechnik betriebstechnische Parameter an einer an das Kommunikationssystem angeschlossenen Bedieneinrichtung bedieneroberflächengesteuert abzufragen und in betriebstechnische Anweisungen einzufügen. Fur das Warten und Administrieren des Kommunikationssystems, insbesondere des digitalen Vermittlungssystems EWSD der Fa. Siemens sind Stapel von betriebstechnischen Anweisungen bzw. Komandodateien vorgesehen, die mit Hilfe der Formular- bzw. Maskentechnik gebildet und anschließend abgearbeitet werden können. Jeder der Stapel von betriebstechnischen Anweisungen repräsentiert einen Auftrag bzw. eine Bedieneraufgabe, z.B. Teilnehmer einrichten oder Teilnehmerzustand abfragen. Das in der obig genannten Druckschrift angegebene Verfahren zum Warten und Administrieren ist auf ein Kommunikationssystem bezogen.

Die der Erfindung zugrundeliegende Aufgabe besteht darin, ein Verfahren zum Warten und Administrieren von unterschiedlichen Kommunikationssystemen unter Berücksichtigung unterschiedlichster Realisierungsvarianten auszugestalten. Die Aufgabe wird durch die Merkmale des Anspruchs 1 gelöst. Weitere vorteilhafte Ausgestaltungen des erfindungsgemäßen Verfahrens sind den Ansprüchen 2 bis 8 zu entnehmen.

Ein wesentlicher Vorteil des erfindungsgemäßen Verfahrens ist darin zu sehen, daß durch eine bei der Initialisierung des Kommunikationsaustausches eines Service-Personalcomputers, d.h. einer Wartungs- und Administrations-Bedieneinrichtung, kommunikationssystemspezifische Informationen vom angeschlossenen Kommunikationssystem automatisch abgefragt werden und auf der Basis dieser kommunikationsspezifischen Informationen und einem zusätzlichen für jeden Stapel von betriebstechnischen Anweisungen gespeicherten Datensatz der für das angeschlossene Kommunikationssystem geeignete Stapel von betriebstechnischen Anweisungen selbstätig ausgewählt wird. In diesen werden bedieneroberflächengesteuert, die benötigten Parameter eingefügt und in einer Auftragsdatei als Auftragsstapel hinterlegt. Bei der Eingabe der betriebstechnischen Parameter ist sowohl eine Syntaxprüfung der eingegebenen Parameter als auch eine Listenüberprüfung einstellbar, bei der ein eingegebener betriebstechnischer Parameter nur dann in eine betriebstechnische Anweisung eingefügt wird, sofern er in einer zugeordneten, mehrere Parameter enthaltende Liste aufgefunden wurde. Durch diese Überprüfungen werden Eingabefehler und damit Fehler beim Warten und Administrieren eines Kommunikationssystems vermieden.

Nach einer bedieneroberflächengesteuerten Initialisierung werden die betriebstechnischen Anweisungen des Auftragsstapels sukzessiv an das angeschlossene Kommunikationssystem übermittelt. Nach jeder Übermittlung einer betriebstechnischen Anweisung an das Kommunikationssystem wird im Service-Personalcomputer eine Antwortinformation eine vorgegebene Zeitspanne erwartet. Diese Antwortinformation wird sowohl im Service-Personalcomputer visualisiert, d.h. am Bildschirm angezeigt, als auch bewertet und daraufhin entsprechende Reaktionen eingeleitet.

Die von dem angeschlossenen Kommunikationssystem übermittelten Antwortinformationen werden besonders vorteilhaft mit Hilfe eines im Service-Personalcomputer vorgesehenen Interpreter-Programmoduls bewertet, d.h. untersucht. Da unterschiedliche Kommunikationssysteme mit unterschiedlichen Realisierungsvarianten an den Service-Personalcomputer anschließbar sind und die Antwortinformationen folglich in unterschiedlichen, d.h. kommunikationssystemindividuellen Sprachen an den Service-Personalcomputer gelangen, ist sowohl eine sprachliche Interpretation als auch eine inhaltliche Interpretation der Antwortinformation vorgesehen. Hierzu ist ein Interpreter-Programmodul mit entsprechenden programmtechnisch realisierten Routinen ausgestattet. Die Auswahl der aktuell für das angeschlossene Kommunikationssystem zu verwendende Routine wird durch die Auswertung der abgefragten kommunikationssystemspezifischen Informationen bewirkt.

Mit Hilfe des erfindungsgemäßen Verfahrens sind mit einem einzigen Service-Personalcomputer bzw. einer einzigen Wartungs- und Administrations-Einrichtung, unterschiedlichste Kommunikationssysteme mit unterschiedlichsten Realisierungsvarianten wart- und administrierbar, wobei unterschiedliche Kommunikationssysteme beispielsweise unterschiedliche Typen von Kommunikationssystemen oder Kommunikationssysteme mit erheblich unterschiedlichen Ausbaugraden darstellen und als unterschiedliche Realisierungsvarianten insbesondere unterschiedliche Softwarevarianten bzw. unterschiedliche Softwareausgaben der wesentlichen programmtechnischen Komponenten eines Kommunikationssystems anzusehen sind.

Ein wesentlicher Aspekt des Service-Personalcomputers ist in der Programmstrukturierung und in der Ausgestaltung der einzelen Programmstrukturen zu sehen, durch die eine erhebliche Steigerung der Modularität bei der Programmkonfiguration und der Portabilität des Service-Personalcomputers für unterschiedlich zu administrierende und zu verwaltende Kommunikationssysteme erreicht wird. Dies bedeutet, daß bei einem späteren Hinzutreten neuer Kommunikationssysteme oder neuer Ausbauvarianten derartiger Kommunikationssysteme oder das Auftreten neuer Kommunikationsdienste sowohl das Administrieren als auch das Warten der Kommunikationssysteme durch Hinzufügen neuer Programmodule, insbesondere von Benutzer-Programmodulen und Schaltungstechnik-Programmodulen beherrscht werden kann. Der erfindungsgemäße Service-Personalcomputer bietet somit in allen Aspekten eine ausgeprägte Anpassungsfähigkeit an unterschiedliche Kommunikationssysteme mit unterschiedlichsten Ausgestaltungen ohne objektive Beeinflussung der im Service-Personalcomputer realisierten Programmstrukturen bzw. der dieser Systemstruktur zugrundeliegenden Systemkonzeption.

Die Modularität bzw. Portabilität des Service-Personalcomputers wird im wesentlichen durch eine in vier Programmstrukturen unterteilte Systemkonzeption bewirkt. Die vier Programmstrukturen stellen die Benutzer-Programmstruktur, die Visualisierungs-Programmstruktur, die Betriebstechnik-Programmstruktur und die Schaltungstechnik-Programmstruktur dar. Hierbei werden mit Hilfe des in der Betriebstechnik-Programmstruktur realisierten Anweisungs-Bearbeitungs-Programmoduls die das Bilden und Übermitteln von betriebstechnischen Anweisungen von und zu den Kommunikationssystemen betreffenden Funktionen bewirkt. Der Zugriff auf dieses Anweisungs-Bearbeitungs-Programmodul und das Kommunikationssystem wird durch das Zugriffs-Programmodul gesteuert. Durch dieses Zugriffs-Programmodul erfolgt zusätzlich die Aktivierung eines der beiden Betriebssysteme in Abhängigkeit von der realisierten Einbindung des jeweiligen Benutzer-Programmoduls. Durch das Einfügen einer Visualisierungs-Programmstruktur wird eine Entkoppelung der von den Kommunikationssystemen übermittelten Fehler- und Systemnachrichten von dem betriebstechnischen Anweisungsverkehr bewirkt. Diese übermittelten Fehler-und Systemmeldungen werden im Service-Personalcomputer ohne weitere Verarbeitung visualisiert.

In die Benutzer-Programmstruktur und die Schaltungstechnik-Programmstruktur sind mit geringfügigem zusätzlichem Aufwand Benutzer-Programmodule oder Schaltungstechnik-Programmodule einfüg- oder entfernbar. Diese Modifikationen sind dem Zugriffs-Programmodul durch entsprechende betriebstechnische Eingaben im Sinne einer zusätzlichen Steuerung zusätzlicher Programmodule oder des Entfernens von Programmodulen anzuzeigen.

Weitere vorteilhafte Ausgestaltungen des Service-Personalcomputers sind den Ansprüchen 10 bis 16 zu entnehmen.

Im folgenden wird das erfindungsgemäße Verfahren sowie die erfindungsgemäße Anordnung anhand von vier Blockschaltbildern und eines Ablaufdiagrammes näher erläutert. Dabei zeigen
Fig. 1 einen Service-Personalcomputer und dessen Anschlußmöglichkeiten an Kommunikationssyteme,
Fig. 2 die Softwarestuktur des Service-Personalcomputers,
Fig. 3 die Programmstruktur des Anweisungs-Bearbeitungs-Programmoduls,
Fig. 4 die Programmstruktur des Zugriff-Programmoduls und
Fig. 5 in einem Meldungsablaufdiagramm das erfindungsgemäße Verfahren in einem gemäß den Fig. 1 bis 4 ausgestalteten Service-Personalcomputer.

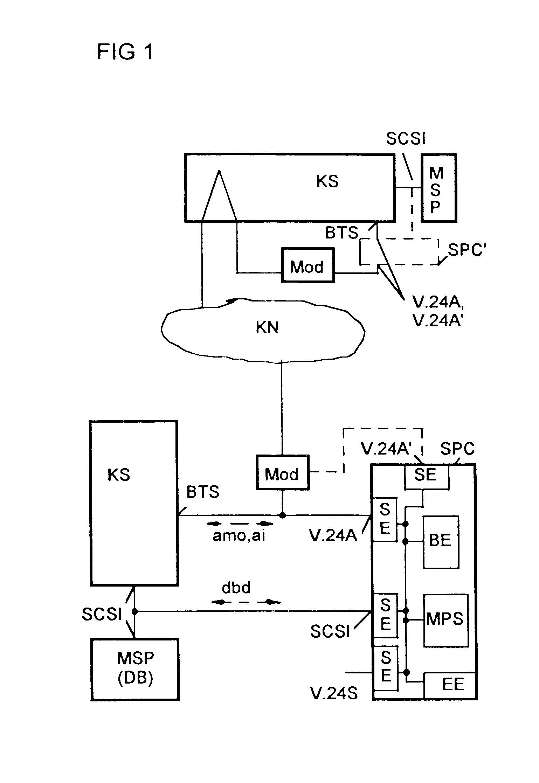

Fig. 1 zeigt einen Service-Personalcomputer SPC und dessen Anschluß an zu administrierende bzw. zu verwaltende Kommunikationssysteme KS. Die Datenbasis DB der Kommunikationssysteme KS ist in angeschlossenen Massenspeichern MSP - beispielsweise einer Harddisc - gespeichert. Fur den Anschluß derartiger Massenspeicher MSP an ein Kommunikationssystem KS sind diese und die Massenspeicher MSP jeweils mit einer peripheren Rechnerschnittstelle SCSI ausgestattet und miteinander verbunden. Die periphere Rechnerschnittstelle SCSI ist vorteilhaft durch die standardisierte, periphere Rechnerschnittstelle "Small Computer System Interface" realisiert. Die "Small Computer System Interface" ist im Dokument X3T9.2 von ANSI (American National Standard Institute) definiert. Für die Kommunikation des Service-Personalcomputers SPC mit dem Massenspeicher MSP eines Kommunikationssystems ist dieser mit einer gleichartig realisierten Rechnerschnittstelle SCSI versehen. Die prozeduralen und physikalischen Eigenschaften dieser Rechnerschnittstelle SCSI sind in einer Rechnerschnittstelleneinheit SE realisiert. Über diese mit der Rechnerschnittstelle SCSI des Massenspeichers MSP verbundenen Rechnerschnittstelle SCSI des Service-Personalcomputers SPC sind die Datenbasen DB der Kommunikationssysteme modifizierbar - d.h. aktualisierbar und Datenbasisinformationen abrufbar.

In einer weiteren Schnittstelleneinheit SE ist eine Datenschnittstelle V.24A mit einem asynchronen Übertragungsverfahren realisiert. Die Datenschnittstelle V.24A ist gemäß der CCITT-Empfehlung V.24 ausgestaltet. Bei einem lokalen Anschluß des Service-Personalcomputers SPC an ein Kommunikationssystem KS ist die Datenschnittstelle V.24A mit einer gleichartigen Betriebstechnikschnittstelle BTS des Kommunikationssystems KS verbunden. Über diese Verbindung werden die betriebstechnischen Anweisungen amo bzw. Antwortinformationen (ai) vom Kommunikationssystem KS übertragen.

Bei einem abgesetzten Betrieb des Service-Personalcomputers SPC, d.h. der Service-Personalcomputer SPC ist über ein öffentliches oder privates Kommunikationsnetz KN mit einem Kommunikationssystem KS verbunden, ist für die Übertragung der betriebstechnischen Anweisungen amo zwischen die Betriebstechnikschnittstelle BTS bzw. die Datenschnittstelle V.24A und dem Kommunikationsnetz KN jeweils ein Modem MOD eingefügt. Mit Hilfe dieser Modems MOD werden die digitalen Informationen in für die Übertragung über das jeweilige Kommunikationsnetz KN geeignete analoge oder digitale Signale umgesetzt. Die Verbindung Service-Personalcomputer SPC - abgesetztes Kommunikationssystem KS ist im abgesetzten Kommunikationssystem KS über nicht dargestellte Teilnebmeranschlüsse und das Koppelfeld geführt, um einen separaten Anschluß an das öffentliche oder private Kommunikationsnetz KN für ein abgesetztes Administrieren und Verwalten zu vermeiden.

Wie in Fig. 1 dargestellt, ist beim abgesetzten Kommunikationssystem KS zusätzlich ein weiterer Service-Personalcomputer SPC' - durch gestrichelte Linien angedeutet - in die Verbindung zwischen dem Modem MOD und dem Kommunikationssystem KS einfügbar. Für diesen Einsatzfall ist der weitere Service-Personalcomputer SPC mit einer weiteren Datenschnittstelle V.24A' ausgestattet. Hierbei wird eine der beiden Datenschnittstellen V.24A, V.24A' an den Betriebstechnikanschluß BTS und die andere Datenschnittstelle V.24A, V.24' mit dem Modem MOD verbunden. Über diese weitere Datenschnittstelle V.24A' eines Service-Personalcomputers SPC ist dieser darüberhinaus mit einem abgesetzten Kommunikationssystem KS verbindbar, dem ebenfalls im Sinne eines Fernadministrierens und Wartens ein Service-Personalcomputer SPC - zugeordnet ist.

Für den direkten Anschluß des Service-Personalcomputers SPC an ein Kommunikationssystem KS weist dieser eine synchrone, durch eine Schnittstelleneinheit SE realisierte Datenschnittstelle V.24S auf. Diese synchrone Datenschnittstelle V.24S ist für den Anschluß an Betriebsterminalanschlüsse BTS mit synchroner Datenübertragung vorgesehen, bei denen beispielsweise eine Unixterminalemulation oder eine Unixapplikation vorgesehen ist.

Ein Service-Personalcomputer SPC weist desweiteren eine bekannte Eingabeeinrichtung EE -, beispielsweise eine Tastatur -, ein Mikroprozessorsystem MPS - beispielsweise ein Mikroprozessorsystem SAB 80 386 der Fa. Siemens - und eine Bildschirmeinrichtung BE auf.

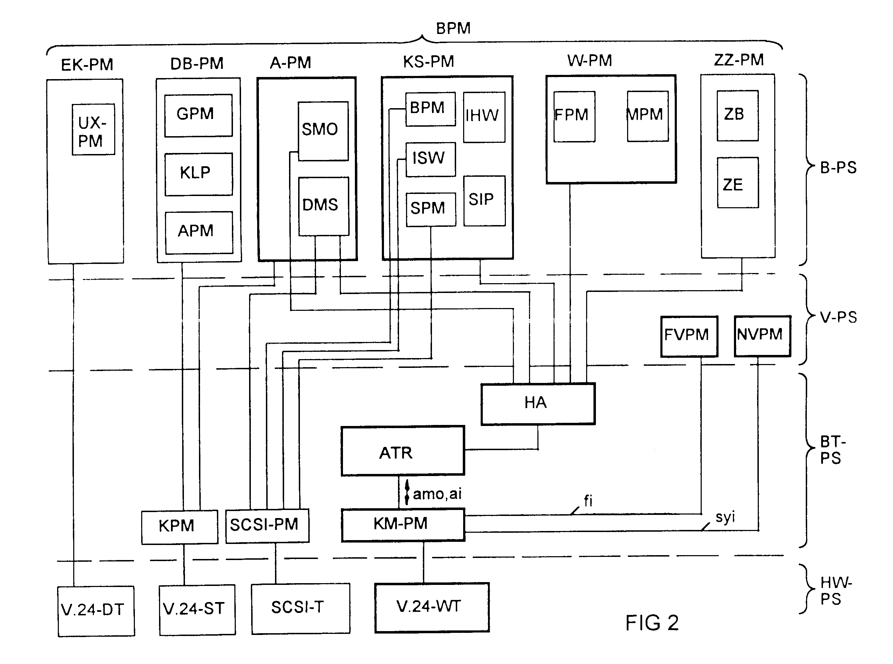

Fig. 2 zeigt die Softwarekonzeption eines in Fig. 1 dargestellten Service-Personalcomputers SPC. Das Bindeglied der Softwarestruktur zur Hardware stellt ein Personalcomputer-Betriebssystem DOS und ein fenstertechnikorientiertes Betriebssystem WIN dar. Das Personalcomputer-Betriebssystem ist beispielsweise durch das Betriebssystem MS DOS 6.0 und das fenstertechnikforientierte Betriebssystem beispielsweise durch Ms-Windows 3.1 realisiert.

Die Softwarestruktur ist prinzipiell in vier hirarchische Ebenen strukturiert. Dies sind im einzelnen die Benutzer-Programmstruktur B-PS, die Visualisierungs-Programmstruktur V-PS, die Betriebstechnik-Programmstruktur BT-PS und die Schaltungstechnik-Programmstruktur HW-PS.

In der Benutzer-Programmstruktur B-PS ist im Basisausbau ein Administrations-Programmodul A-PM, ein Kommunikationssystem-Programmodul KS-PM und ein Wartungs-Programmodul W-PM angeordnet. Optional ist ein Datenbasis-Programmodul DB-PM, ein weiteres Kommunikationsmodul EK-PM sowie ein Zugriffszeitpunkt-Programmodul ZZ-PM anordenbar. Die Benutzer-Programmodule BPM dieser Strukturebene B-PS sind bedieneroberflächengesteuert, d.h. die Initialisierung und Steuerung dieser Programmodule wird im wesentlichen durch Bedienereingaben bewirkt. Zusätzlich werden von einem Kommunikationssystem KS übermittelte, daß jeweilige Benutzer-Programmodul BPM betreffende Antwortinformationenen ai mit Hilfe des jeweiligen Benutzer-Programmoduls BPM und der Bildschirmeinrichtung BE visualisiert.

Im Administrations-Programmodul A-PM werden Informatioenen bzw. Parameter für betriebstechnischen Anweisungen amo, die für das Administrieren von Kommunikationssystemen KS vorgesehen sind, gebildet. Hierzu werden bedieneroberflächengesteuert die jeweiligen in die betriebstechnischen Anweisungen amo einzufügenden Parameter p bzw. Informationen abgefragt und im Sinne eines Einfügens in betriebstechnische Anweisungen amo weitergeleitet. Da administrative betriebtechnische Anweisungen amo insbesondere das Aktualisieren bzw. Ändern der Datenbasis beinhalten, werden in einem hierfür vorgesehenen Konfigurations-Verwaltungs-Programmodul DMS die diesbezüglichen Parameter p bzw. Informationen für die betriebstechnisichen Anweisungen amo bedieneroberlächengesteuert gebildet. Zur Unterstützung ist ein Support-Programmodul SMO vorgesehen, mit dessen Hilfe insbesondere eine in einem Massenspeicher MSP abgelegte Datenbasis DB über die Rechnerschnittstelle SCSI aktualisiert bzw. geändert oder gelesen wird.

Mit Hilfe des Kommunikationssystem-Programmoduls KS-PM wird das zu administrierende bzw. zu verwaltende Kommunikationssystem KS in Betrieb genommen bzw. installiert. Hierfür ist jeweils ein Installationsprogrammodul für die Installation der Hardware IHW und der Software ISW vorgesehen. Ein weiteres Shell-Programmodul SPM stellt eine graphische Personalcomputer-BetriebstechnikSchnittstelle für das Steuern von Speichereinrichtungen zur Speicherung von Daten und Dateien dar. Dies sind insbesondere Funktionen wie Darstellen von Directories von Speichereinrichtungen der Kommunikationssysteme KS, Anzeigen des Inhalts von Dateien und Kopieren von Dateien.

Mit Hilfe eines Backup-Programmoduls BPM werden Sicherungskopien der Datenbasen DB oder Datenbasisteile der zu administrierenden bzw. zu verwaltenden Kommunikationssysteme KS erstellt und gespeichert.

Ein im Kommunikationssystem-Programmodul KS-PM implementiertes Systeminformations-Programmodul SPM visualisiert kommunikationssystemindividuelle Informationen oder steuert deren Ausgabe - z.B. an eine Druckereinrichtung. Beispielsweise sind dies Informationen über die Version und die Registriernummer eines Kommunikationssystems, der Release der implementierten Firm- oder Loadware und Angaben über die Hardware-Softwarekonfiguration des jeweiligen Kommunikationssystems KS.

Das Wartungsprogrammodul W-PM umfaßt ein Fehlerbehandlungsprogrammodul FPM und ein Maintenance-Programmodul MPM. Mit Hilfe des Maintenance-Programmoduls MPM werden Parameter p und Informationen für betriebstechnische Anweisungen amo gebildet, mit deren Hilfe die Konfiguration betreffende Abfragen, den vermittlungstechnischen Zustand betreffende Abfragen und den Start von Testprozeduren in den zu administrierenden bzw. zu verwaltenden Kommunikationssystemen KS gestartet werden. Die Konfiguration betreffende Statusabfragen sind insbesondere Anfragen über die Anzahl anschließbarer Teilnehmer, Anzahl verfügbarer Kommunikationsanschlüsse usw.. Vermittlungstechnische Abfragen stellen Abfragen über die Belegung und die vermittlungstechnischen Zustände von Kommunikationsanschlüssen, Schnittstellen und Gebührenaufzeichnungen dar.

Das optionale Datenbasis-Programmodul DB-PM weist ein zum Bilden von Datenbasen DB vorgesehenes Generierungs-Programmodul GPM, ein das Aufsammeln von Datenbasisdaten bewirkendes Kollektions-Programmodul KLP und ein eine Datenbasisaktualisierung eines Kommunikationssystems KS bewirkendes Aktualisierungs-Programmodul APM auf. Diese Programmodule GPM, KLP, APM wirken auf ein in der Betriebstechnik-Programmstruktur BT-PS angeordnetes, die synchrone Datenschnittstelle V.24S prozedural steuerndes Programmodul KPM ein, wobei über die synchrone Datenschnittstelle V.24S ausschließlich Datenbasisdaten an das oder vom Kommunikationssystemen KS übermittelt werden.

Die prozedurale Steuerung der weiteren asynchronen Datenschnittstelle V.24A' übernimmt das externe Kommunikations-Programmoduls EK-PM. Hierfür werden für das Kommunikationssystem KS vorgesehene Terminalanschlüsse, insbesondere Betriebsterminalanschlüsse emuliert. Beispielsweise ist ein Programmodul für die Emulation eines Unixterminals UX-PM dargestellt. Für weitere Emulationen - beispielsweise die Emulation eines weiteren Betriebstechnikterminals oder einer Datenverarbeitungsanlage - sind ohne Auswirkungen auf vorhandene Programmodule weitere Programmodule in das externe Kommunikations-Programmodul EK-PM einbindbar.

In der Visualisierungs-Programmstruktur V-PS sind für die Visualisierung der von den Kommunikationssystemen KS übermittelten Fehler - und Systemmeldungen jeweils ein Fehlervisualisierungs-Programmodul FV-PM und ein Nachrichtenvisualisierungs-Programmodul NV-PM vorgesehen. Mit Hilfe dieser beiden Programmodule FV-PM werden die von den Kommunikationssystemen KS als Antwortinformationen ai übermittelten Fehler - und Systemzustandsinformationen ohne weitere Bearbeitung oder Beeinflussung direkt an der Bildschirmeinrichtung BE des Service-Personalcomputers SPC visualisiert, d.h. angezeigt. Dies ist für eine umgehende Reaktion nach einem Auftreten derartiger Meldungen erforderlich.

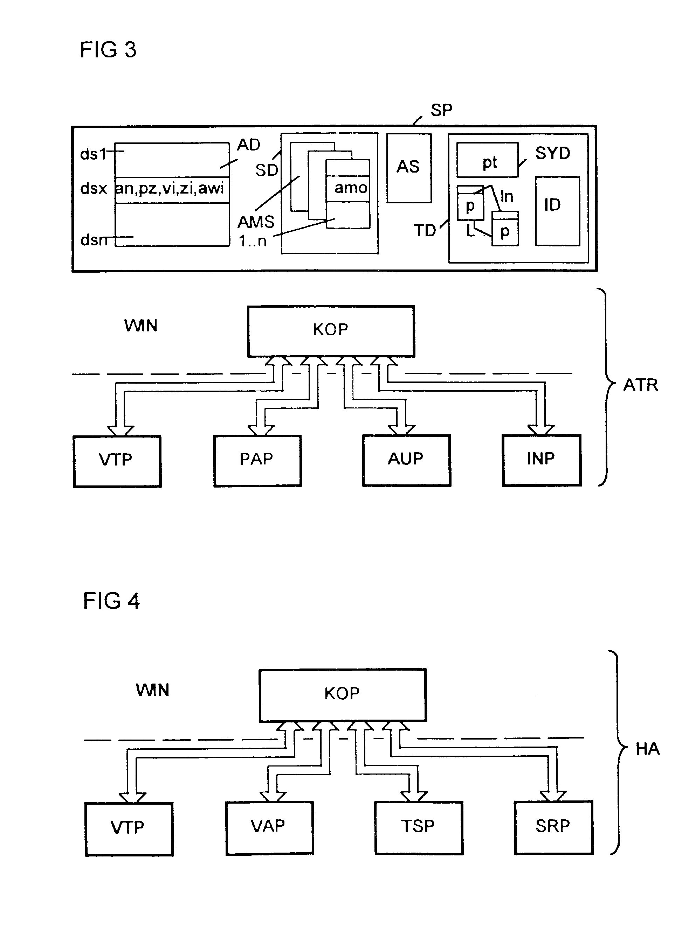

In der Betriebstechnik-Programmstruktur BT-PS sind die den Service-Personalcomputer SPC steuernden und koordinierenden Programmodule angeordnet. Dies sind insbesondere das Anweisungs-Bearbeitungs-Programmodul ATR und das Zugriffs-Programmodul HA. Das Anweisungs-Bearbeitungs-Programmodul ATR wird in Fig. 3 und das Zugriffs-Programmodul HA in Fig. 4 näher erläutert.

Darüberhinaus beinhaltet die Betriebstechnik-Programmstruktur BT-PS ein Rechnerschnittstellen-Programmodul SCSI-PM und ein Kommunikations-Programmodul KM-PM. Mit Hilfe des Rechnerschnittstellen-Programmoduls SCSI-PM wird die periphere Rechnerschnittstelle SCSI prozedural gesteuert, d.h. die Informationen an die jeweiligen Schnittstellenleitungen zeitgerecht gesteuert. Hierbei werden die zu übermittelnden oder empfangenen Informationen bzw. Daten von den Programmodulen in der Benutzer-Programmstruktur B-PS direkt übermittelt oder an diese weitergeleitet. Die betroffenen Programmodule DMS, ISW, BPM, SPM sind durch Verbindungen zwischen dem Rechner-Programmodul SCSI-PM und den jeweiligen Programmodulen DMS, ISW, BPM, SPM angedeutet.

Mit Hilfe des Kommunikations-Programmoduls KP-PM werden die vom Anweisungs-Bearbeitungs-Programmodul ATR übermittelten bzw. an dieses zu übermittelnde Informationen ai bzw. betriebstechnischen Anweisungen amo an die asynchrone Datenschnittstelle V.24A zeitgerecht gesteuert bzw. an diese übermittelt. Desweiteren werden in diesem Kommunikations-Programmodul KM-PM die von den Kommunikationssystemen KS übermittelten Fehlerinformationen fi und Systeminformationen syi erkannt und direkt an das Fehlervisualisierungs-Programmmodul FV-PM bzw. das Nachrichtenvisualisierungs-Programmodul NV-PM übermittelt - durch entsprechende Verbindungen dargestellt.

Die Schaltungstechnik-Programmstruktur HW-PS umfaßt im Basisausbau als Bindeglied zu den physikalischen Leitungen der asynchronen Datenschnittstelle V.24A einen im fenstertechnikorientierten Betriebssystem WIN realisierten asynchronen Datenschnittstellentreiber V.24-WT. Bei diesem Basisausbau ist eine asynchrone Datenschnittstelle V.24A realisiert, mit dessen Hilfe ein Service-Personalcomputer SPC lokal direkt oder über ein öffentliches oder lokales Kommunikationsnetz KN an den Betriebstechnikanschluß BTS eines Kommunikationssystems KS anschließbar ist.

Optional ist ein Rechnerschnittstellentreiber SCSI-T, ein im Personalcomputer-Betriebssystem DOS realisierter asynchroner Datenschittstellentreiber V.24-DT und ein im Personalcomputer-Betriebsprogramm DOS realisierter synchroner Datenschnittstellentreiber V.24-ST in die Schaltungstechnik-Programmstruktur HW-PS einfügbar. Mit Hilfe dieser Schnittstellentreiber T werden die in Fig. 1 erläuterten Schnittstellen V.24A', SCSI, V.24S realisiert.

Fig. 3 zeigt die Subprogrammstruktur des Anweisungs-Bearbeitungs-Programmoduls ATR. Für die Übermittlung von betriebstechnischen Anweisungen amo oder Antwortinformationen ai zwischen den einzelnen Programmodulen ist ein im fenstertechnikorientierten Betriebssystem WIN implementiertes Koordinierungs-Programmodul KOP vorgesehen. Die Funktionen des Anweisungs-Bearbeitungs-Programmoduls ATR realisiert ein Verteil-Programmodul VTP, ein Parameter-Programmodul PAP, ein Auswerte-Programmodul AUP und ein Interpreter-Programmodul INP. Mit Hilfe des Verteil-Programmoduls ATP werden die vom Koordinierungs-Programmodul KOP übermittelten betriebstechnischen Anweisungen amo bzw. Antwortinformaionen ai dahingehend bewertet bzw. untersucht, ob die vom Koordinierungsprogrammodul KOP übermittelten betriebstechnischen Anweisungen amo bzw. Antwortinformationen ai an eines der drei weiteren Programmodule PAP, AUP, INP oder an ein anderes Programmodul PM im Service-Personalcomputer zu übermitteln sind. Die Bewertung, d.h. die Ermittlung des Zielprogramms, wird insbesondere durch Auswerten der in der entsprechenden Meldung angegebenen Meldungsart bewirkt. Desweiteren finden Konsistenzprüfungen der übermittelten Meldungen bezüglich der in den Meldungen angegebenen Zuständen und der Art der Meldung statt.

Mit Hilfe des Parameter-Programmoduls PAP werden die über das Koordinierungs-Programmodul KOP von den Benutzer Programmodulen BPM übermittelten Parameter p in betriebstechnische Anweisungen amo eingefügt bzw. Informationen und betriebstechnische Parameter p im Sinne einer Visualisierung durch eines der Benutzer-Programmodule BPM aus einer Antwortinformation ai bzw. betriebstechnischen Anweisung amo entfernt und über das Koordinierungs-Programmodul KOP an das jeweilige Benutzerprogrammodul BPM übermittelt.

Das Auswerte-Programmoduls AUP überprüft und wertet von einem zu administrierenden bzw. zu verwaltenden Kommunikationssystem KS übermittelte Antwortinformaionen ai aus. Diese Antwortinformaionen ai stellen überwiegend eine Bestätigung bzw. eine Reaktion einer durch eine vorgehend ausgesandte betriebstechnische Anweisung amo initialisierte betriebstechnische Aktion bzw. Aktualisierung dar. Die gegebenenfalls in diesem Auswerte-Programmodul AUP ermittelten, bei unterschiedlichen Kommunikationssystemsvarianten unterschiedlichen Antwortinformaionen ai werden mit Hilfe eines Interpreter-Programmoduls INP in eine einheitlliche bedienerverständliche Information umgesetzt. Dies bedeutet, daß die meist schwer verständlichen, unterschiedlichen kommunikationssystemspezifischen Antwortinformaionen ai in bedienerverständliche Antwortinformaionen ai umgewertet und über das Koordinierungs-Programmodul KOP an das jeweilige Benutzer-Programmodul BPM übermittelt und mit dessen Hilfe visualisiert werden.

Dem Anweisungs-Bearbeitungs-Programmodul ATR ist ein Speicher SP zugeordnet, in dem eine Auftragsdatei AD, eine Stapeldatei SD, eine Testdatei TD und ein Speicherbereich für das Speichern von mit Hilfe des erfindungsgemäßen Verfahren gebildeten Auftragsstapel AS vorgesehen ist. In der Stapeldatei SD sind für jeden Administrationsauftrag AA, z.B Teilnehmer einrichten, ein oder mehrere Stapel AMS1..n gespeichert. Die Anzahl der Stapel AMS1..n hängt von der Anzahl der unterschiedlichen Kommunikationessysteme KS und deren Ausgestaltungsvarianten ab. So sind beispielsweise bei unterschiedlichen Softwareausgaben bei ansonsten gleichen Kommunikationssystemen KS für dieselbe Bedieneraufgabe unterschiedliche betriebstechnische Anweisungen amo oder andere betriebstechnische Parameter p oder eine andere Kombination möglich. Für jede dieser Varianten ist folglich ein separater Stapel AMS1..n von betriebstechnischen Anweisungen amo vorgesehen.

In der Auftragsdatei AD ist jedem in der Stapeldatei SD gespeicherten Stapel AMS1..n ein Datensatz ds1..n zugeordnet. Ein Datensatz ds enthält eine den jeweiligen Administrationsauftrag (AA) identifizierende Auftragsnummer an, eine die Anzahl der variablen betriebstechnischen Parameter p anzeigende Parameterzahl pz, eine das Fortführen oder Beenden des Übermittelns von betriebstechnischen Anweisungen amo eines Auftragsstapels AS bei auftretenden Fehlern anzeigende Verfahrensinformation vi, eine die maximale Zeit anzeigende Zeitinformation zi, durch die der Zeitraum bestimmt ist, in dem nach Übermitteln einer betriebstechnischen Anweisung amo Antwortinformationen ai erwartet und bewertet werden, und eine die Art der Auswertung der Antwortinformationen ai anzeigende Auswerteinformation awi.

In der Testdatei TD sind eine Syntaxdatei SYD, eine Interpreterdatei ID und Listen L gespeichert. In der Syntaxdatei SYD sind die an der Bedieneroberfläche BO des Service-Personalcomputers SPC eingebbaren betriebstechnischen Parameter pt gespeichert, d.h. für alle möglichen betriebstechnischen AnWeisungen amo für alle Kommunikationssystemtypen und deren Ausbauversionen. Diese gespeicherten betriebstechnischen Parameter pt sind für die syntaktische Überprüfung von an der Bedieneroberfläche BO eingegebenen betriebstechnischen Parameter p vorgesehen. In der Interpreterdatei ID sind die für eine Interpretation der von den unterschiedlichen Kommunikationssystemen KS übermittelten Antwortinformationen ai erforderlichen Informationen gespeichert. In den Listen L sind Gruppen von betriebstechnischen Parametern pt sowie eine Listennummer In In gespeichert. Ist bei einem Eingabevorgang eines betriebstechnischen Parameters p eine Listennummer In angezeigt, so wird der über die Bedieneroberfläche BO eingegebene betriebstechnische Parameter p mit den in der betreffenden Liste L angegebenen betriebstechnischen Parameter pt auf Übereinstimmung geprüft.

Fig. 4 zeigt die Subprogrammstruktur des Zugriff-Programmoduls HA. Fur die Übermittlung von betriebtechnischen Anweisungen amo oder Antwortinformationen ai zwischen den einzelnen Programmodulen ist ebenfalls ein im fenstertechnikorientierten Betriebssystem WIN implementiertes Koordinierungs-Programmodul KOP vorgesehen. Die Funktionen des Zugriff-Programmoduls HA realisiert ein Verteil-Programmodul VTP, ein Verbindungssteuerungs-Programmodul VAP, ein Transport-Programmodul TSP und ein Schnittstellen-Programmodul SRP. Die Funktionen des Verteil-Programmoduls VTP entsprechen den in der Fig. 3 beschriebenen Funktionen -siehe Fig.3.

Mit Hilfe des Verbindungssteuerungs-Programmodul VAP wird im Sinne des Administrierens und Wartens eine Verbindung zum angeschlossenen Kommunikationssystem KS aufgebaut, überwacht und abgebaut, wobei im Verbindungssteuerungs-Programmodul VAP insbesondere die vermittlungstechnischen Funktionen für den Verbindungsauf-und -abbau realisiert sind. Mit Hilfe des Transport-Programmoduls TSP werden die vermittlungstechnischen und die weiteren zu übermittelnden Informationen ai in für den Kommunikationsaustausch mit dem angeschlossenen Kommunikationssystem KS vorgesehene Meldungen eingefügt bzw. entnommen und an das die Schnittstelle V.24 A prozedural steuernde Schnittstellen-Programmodul SRP übermittelt bzw. von diesem empfangen.

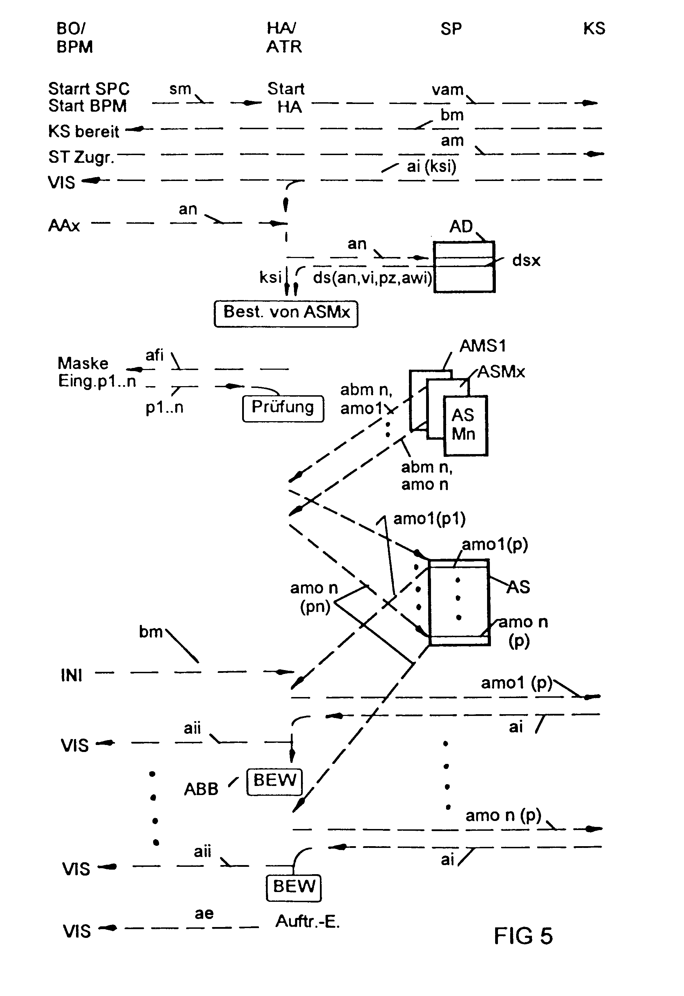

Fig. 5 zeigt in einem Meldungs-Ablaufdiagramm das erfindungsgemäße Verfahren in einer Anordnung eines lokal an ein Kommunikationssystem KS angeschlossenen Service-Personalcomputer SPC nach Fig. 1 mit einer Programmstruktur gemäß Fig. 2 bis 4. Im oberen Bereich der Fig. 5 sind in der linken Hälfte die den Meldungsfluß steuernden Programmodule BO/BPM, HA/ATR einschließlich des Speichers SP und in der linken Hälfte das Kommunikationssystem KS angegeben, denen jeweils die darunterliegende Spalte zugeordnet ist. Die erste Spalte ist der Benutzeroberfläche BO der jeweiligen in der Benutzer-Programmstruktur B-PS angeordneten Benutzer-Programmodule BPM zugeordnet. Desweiteren ist jeweils eine Spalte für das Anweisungs-Bearbeitungs-Programmodul ATR zusammen mit dem Zugriffsprogrammodul HA und für den Speicher SP vorgesehen.

Nach der Inbetriebnahme eines Service-Personalcomputers SPC wird beispielsweise auf dessen graphischer Oberfläche BO eine Gruppe von aufrufbaren Programmen bzw. Funktionen angezeigt. Bei der graphischen Oberfläche BO eines fenstertechnikorientierten Betriebssystem WIN werden die einzelnen Programme bzw. Funktionen durch Icon graphisch dargestellt, wobei die Funktion des Service-Personalcomputers SPC durch Anklicken eines die Service-Personalcomputer-Funktionen repräsentierenden Icon aufgerufen werden. Dieser Aufruf ist in Fig. 5 durch die Bezeichnung "Start SPC" angegeben. Daraufhin werden auf der graphischen Oberfläche BO des fenstertechnikorientierten Betriebssystems WIN aufrufbare Benutzer-Programmodule BPM der Benutzer-Programmstruktur B-PS beispielsweise durch Icons dargestellt. Der Start eines der Benutzer-Programmodule BPM wird ebenfalls durch Anklicken des entsprechenden Icon bewirkt und ist in Fig. 5 durch Angabe der Information "Start BPM" dargestellt. Durch das jeweilige Benutzerprogrammodul BPM wird eine Startmeldung sm an das Zugriffs-Programmodul HA übermittelt, worauf dieses gestartet wird - siehe Fig. 4 Angabe "Start HA". Mit Hilfe des Zugriffs-Programmoduls HA wird automatisch eine Verbindungsaufbaumeldung vam gebildet und über das aktivierte Anweisungs-Bearbeitungs-Programmodul ATR an das angeschlossene Kommunikationssystem KS übermittelt. Vom Kommunikationssystem KS wird eine Bestätigungsmeldung bm übermittelt und an der Oberfläche BO des aktuell gestarteten Benutzer-Programmoduls BPM angezeigt. Die Anzeige ist durch die Angabe "KS bereit" angedeutet. Durch diese Angabe ist lediglich die Bereitschaft für eine Informationsübermittlung des Kommunikationssystems KS bestätigt.

Anschließend wird durch eine entsprechende Eingabe - siehe Fig. 5 die Angabe "ST Zugr." - der betriebstechnische Zugriff zu dem zu administrierenden bzw. verwaltenden Kommunikationssystem KS gestartet. Hierzu wird im jeweiligen Benutzer- Programmodul BPM eine Anmeldemeldung am gebildet und an das Kommunikationssystem KS transferiert. Die hierdurch abgefragten kommunikationsspezifischen Informationen ksi über die Kommunikationssprache, die Art, den Typ und den Ausbaugrad des Kommunikationssystem KS werden in eine Antwortinformation ai eingefügt und an das Anweisungs-Bearbeitungs-Programmodul ATR transferiert und mit Hilfe des aktuell ablaufenden Benutzer-Programmoduls BPM visualisiert - siehe Fig.5 "VIS".

Nach einer bedieneroberfächengesteuerten Auswahl eines Administrationsauftrags (AAx) wird in dem betreffenden Benutzer-Programmodul BPM eine zugeordnete Auftragsnummer an gebildet und an das Anweisungs-Bearbeitungs-Programmodul ATR übermittelt. In diesem wird mit Hilfe der Auftragsnummer an und insbesondere den in den kommunikationsspezifischen Informationen ksi enthaltenen Informationen über den Typ und die Ausbauversion der relevante Datensätze (dsx) gelesen und der relevante Stapel ASMx von betriebstechnischen Anweisungen amo bestimmt. Durch das Anweisungs-Bearbeitungs-Programmodul ATR wird nun das Abfragen der in den relevanten Stapel ASMx einzufügenden betriebstechnischen Parameter p eingeleitet. Hierzu wird vom Anweisungs-Bearbeitungs-Programmodul ATR eine Abfrageinformation afi an das aktuell aktivierte Benutzer- Programmodul BPM übermittelt, worauf mit dessen Hilfe eine Abfragemaske - siehe "Maske" - an die Bedieneroberfläche BO gesteuert wird. Nach der Eingabe - siehe "Eing.pl n" der betriebstechnischen Parameters p1..n werden diesen an das Anweisungs-Bearbeitungs-Programmodul ATR übermittelt und in die entsprechende betriebstechnische Anweisungen amo1..n eingefügt. Vor einer Einfügung werden die betriebstechnischen Parameter p1..n auf ihre syntaktische Richtigkeit überprüft. Hierzu werden die übermittelten betriebstechnischen Parameter p mit betriebstechnischen Parametern pt verglichen, die in der Syntaxdatei SYD der Testdatei TD gespeichert sind. Bei einer Übereinstimmung wird jeweils der betriebstechnische Parameter p eingefügt und bei fehlender Übereinstimmung wird dies an der Bedieneroberfläche BO des Service-Personalcomputers SPC angezeigt - nicht dargestellt. Ist im Datensatz dsx eine Listennummer In angegeben, so wird der aktuell eingegebene betriebstechnische Parameter p1..n mit betriebstechnischen Parametern p der addressierten Liste L verglichen, wobei die Listen L in der Testdatei TD gespeichert sind. Wird der eingegebene betriebstechnische Parameter p1..n in der jeweiligen Liste L aufgefunden, wird der betriebstechnische Parameter p1..n eingefügt. Andernfalls wird das Nichtauffinden an der Bedieneroberfläche BO angezeigt. Diese Überprüfungen der eingegebenen betriebstechnischen Parameter p sind in Fig. 5 durch die Bezeichnung "Prüfung" angedeutet. Die mit einem becriebstechnischen Parametern p1..n versehenen betriebstechnischen Anweisungen amo werden jeweils in einen Auftragsstapel AS im Speicher SP eingetragen.

Nach einer Initialisierung INI an der Bedieneroberfläche BO wird im aktuell aktiven Benutzer- Programmodul BPM eine Startmeldung bm gebildet und an das Anweisungs-Bearbeitungs-Programmodul ATR übermittelt. Mit dessen Hilfe wird die erste betriebstechnische Anweisung amo1 des Auftragsstapels AS gelesen und an das angeschlossenen Kommunikationssystem KS weitergeleitet. Im Kommunikationssystem KS wird entsprechend der übermittelten betriebstechnischen Anweisung amo1 ein administrativer oder Wartungsvorgang eingeleitet. Ein derartiger Vorgang kann beispielsweise eine Datenbasisaktualisierung oder eine Statusabfrage darstellen. Eine positive oder negative Bestätigung des initialisierten Vorganges oder eine abgefragte Informationen werden mit Hilfe einer Antwortinformation ai an den Service-Personalcomputer SPC übermittelt. Die Antwortinformationen ai werden mit Hilfe des im Anweisungs-Bearbeitungs-Programmodul ATR integrierten Interpreter-Programmoduls INP interpretiert, d.h. die Ausgabevarianten-unterschiedlichen und teilweise unverständlichen Inhalte der Antwortinformationen ai werden in einheitliche bedienerverständliche Informationen aii umgewertet. Die umgewerteten Antwortinformation aii werden im Sinne einer Bedienerinformation an der Bedieneroberfläche BO visualisiert - siehe Fig.5 "VIS".

Bei Fehler anzeigenden Antwortinformationen ai wird gemäß einer im Datensatz dsx angegebenen Verfahreninformation vi, einer Zeitinformation zi und einer Auswerteinformation reagiert. Durch die Zeitinformation zi - beispielsweise in Minuten - ist eine Zeitspanne definiert, nach deren Ablauf überprüft wird, ob Antwortinformationen ai vom Kommunikationssystem KS übermittelt wurden. Bei einer Übermittlung wird die Zeitspanne neu gestartet, ansonsten wird eine Fehlermeldung gebildet und visualisiert. Durch die Verfahreninformation vi wird weiterhin angegeben, ob die Weiterbearbeitung eines Auftragsstapels AS bei im Kommunikationssystem KS nicht oder teilweise durchgeführten betriebstechnische Anweisungen amo unterbrochen oder weitergeführt werden soll. In der Auswerteinformation awi ist die Art der Auswertung für im Kommunikationssystem KS durchgeführte oder nicht durchgeführte betriebstechnische Anweisungen amo angegeben, d.h. die Bewertung der Antwortinformationen ai ohne oder mit Interpretation und sofern mit Interpretation mit welchen der unterschiedlichen im Interpreter-Programmodul I-PM vorhandenen Interpretationsverfahren. Die Bewertungsfunktionen sind in Fig. 5 durch die Bezeichnung "BEW" angedeutet.

Bei fehlerfreiem Ablauf werden die betriebstechnischen Anweisungen amo des Auftragsstapels AS in vorhergehend beschriebener Weise abgearbeitet und das Ende ae der Auftragsbearbeitung - siehe "Auftr.E." - dem Benutzer-Programmodul PM mitgeteilt und visualisiert - siehe Fig. 5 "VIS".

Der Service-Personalcomputer SPC stellt ein mobiles Betriebstechnikterminal dar, das bei maximalem Bedienkomfort ein lokales und ferngesteuertes Administrieren und Warten von unterschiedlichen Kommunikationssystemen KS mit unterschiedlichen Ausbauvarianten ermöglicht. Dies bedeutet eine erhebliche Reduzierung der erforderlichen Betriebsterminaltypen und sichert durch seine modulare Systemkonzeption eine flexible Anpassung hinschtlich der Administrierung bzw. Verwaltung für zukünftige Kommunikationssysteme KS.

## Patentansprüche

1. Verfahren zum Administrieren und Warten von Kommunikationssystemen (KS), an die ein Service-Personalcomputer (SPC) anschließbar ist, bei dem im Service-Personalcomputer (SPC)
- eine Auftragsdatei (AD) eingerichtet ist, in der für jeden initialisierbaren Administrationsauftrag (AA) ein auftragsindividueller Datensatz (ds) gespeichert ist,
- für jeden Administrationsauftrag (AA) zumindest ein kommunikationssystemspezifischerStapel (AMS) von betriebstechnischen Anweisungen (amo) gespeichert ist, in dem jeweils Auftragsidentifikationsinformationen (an) und in die zumindest teilweise kommunikationsindividuelle betriebstechnische Parameter (P) einfügbar sind,
- im Rahmen einer Initialisierung einer Kommunikationsbeziehung zwischen dem Service-Personalcomputer (SPC) und dem angeschlossenen Kommunikationssystem (KS) kommunikationssystemspezifische Informationen (ksi) abgefragt werden,
- nach einer bedieneroberflächengesteuerten Auswahl eines Administrationsauftrages (AA) mit Hilfe des auftragsindividuellen Datensatzes (DS) und der kommunikationssystemspezifischen Informationen (ksi) der vorgesehene Stapel (AMS) von betriebstechnischen Anweisungen (amo) ausgewählt wird,
- mit Hilfe bedieneroberflächengesteuerter Benutzer-Programmmodule (BPM) und eines Anweisungs-Bearbeitungs-Programmoduls (ATR) die kommunikationssystemindividuellen Parameter (p) abgefragt, überprüft, in die ausgewählten betriebstechnischen Anweisungen (amo) eingefügt und zu einem aktuellen Auftragsstapel (AS) zusammengestellt werden, und
- die betriebstechnischen Anweisung (amo) des aktuellen Auftragsstapels (AS) sukzessiv an das Kommunikationssystem (KS) übermittelt werden, wobei nach jeder Übermittlung eine vom Kommunikationssystem (KS) übermittelte Antwortinformation (ai) mit Hilfe des aktuell aktiven Benutzer-Programmoduls (BPM) und des Anweisungs-Bearbeitungs-Programmoduls (ATR) die Anwortinformationen (ai) interpretiert, visualisiert, bewertet und in Abhängigkeit vom Bewertungsergebnis die sukzessive Übermittlung der betriebstechnischen Anweisungen (amo) fortgesetzt oder beendet wird oder bedieneroberflächengesteuert Steuerinformationen abgefragt und in Abhängigkeit von dem Informationsinhalt der abgefragten Steuerinformationen die Übermittlung der betriebstechnischen Anweisungen (amo) eines Auftragsstapels (AS) beendet oder fortgesetzt wird.

2. Verfahren nach Anspruch 1,
dadurch gekennzeichnet,
daß ein Datensatz (ds) der Auftragsdatei (AD) durch
- eine den jeweiligen Administrationsauftrag (AA) identifizierende Auftragsnummer (an),
- eine die Anzahl der variablen betriebstechnische Parameter (P) anzeigende Parameterzahl (pz),
- eine das Fortführen oder Beenden des Übermittelns von betriebstechnischen Anweisungen (amo) eines Auftragsstapels (AS) bei auftretenden Fehlern anzeigende Verfahrensinformation (vi),
- eine die maximale Zeit anzeigende Zeitinformation (zi), durch die der Zeitraum bestimmt ist, in dem nach Übermitteln einer betriebstechnischen Anweisung (amo) Antwortinformationen (ai) erwartet und bewertet werden, und
- eine die Art der Auswertung der Antwortinformationen (ai) anzeigende Auswerteinformation (awi)
repräsentiert ist.

3. Verfahren nach Anspruch 1,
dadurch gekennzeichnet,
daß die kommunikationssystemspezifische Informationen (ksi) durch
- eine den jeweiligen Administrationsauftrag (AA) identifizierende Auftragsnummer (an),
- eine den Kommunikationssystemtyp anzeigende Typeninformation (tyi) und/oder
- eine im jeweiligen Kommunikationssystem (KS) implemetierte Programmversion anzeigende Versionsinformation (vi) und/oder
- eine den Gültigkeitsumfang der Programmversion anzeigende Gültigkeitsinformation (gi)
repräsentiert ist.

4. Verfahren nach einem der Ansprüche 1 bis 3,
dadurch gekennzeichnet,
daß in einer zusätzlichen Syntaxtdatei (SYD) der Testdatei (TD) jeder bedieneroberflächengesteuert eingebbare betriebstechnische Parameter (pt) gespeichert ist, daß während des Bildens von Auftragsstapeln (AS) jeder bedieneroberflächengesteuert eingegebene betriebstechnische Parameter (p) mit Hilfe der in der Syntaxdatei (SYD) gespeicherten betriebstechnische Parameter (pt) auf syntaktische Richtigkeit überprüft wird.

5. Verfahren nach Anspruch 4,
dadurch gekennzeichnet,
daß nach einem Feststellen eines syntaktischen Fehlers eines bedieneroberflächengesteuert eingegebenen betriebstechnischen Parameters (p) die Abfrage des betreffenden betriebstechnischen Parameters (p) erneuet eingeleitet wird.

6. Verfahren nach einem der Ansprüche 1 bis 5,
dadurch gekennzeichnet,
daß in der Testdatei (TD) Listen (L) von bedieneroberflächengesteuert eingebbaren betriebstechnischen Parameter (p) gespeichert sind, wobei in eine Liste (L) jeweils bedieneroberflächengesteuert eingebbare betriebstechnische Parameter (p) eingetragen sind, die bei einer Angabe einer der Listen (L) beim Bilden von Auftragsstapeln (AS) bedieneroberflächengesteuert eingegeben werden dürfen, wobei die zu überprüfende Liste (L) zusammen mit den bedieneroberflächengesteuert einzugebenden betriebstechnischen Parametern (p) im Auftragsstapel (AS) angegeben ist.

7. Verfahren nach Anspruch 6,
dadurch gekennzeichnet,
daß bei einer angegebenen Liste (L) der bedieneroberflächengesteuert eingegebene betriebstechnische Parameter (p) in der Liste (L) gesucht und bei Auffinden dieser in die betreffende betriebstechnische Anweisung (amo) eingefügt und bei einem Nichtauffinden eine entsprechende Fehlerinformation visualisiert wird.

8. Verfahren nach einem der vorhergehenden Ansprüche,
dadurch gekennzeichnet,
daß mit Hilfe eines Interpreter-Programmoduls (INP) die von dem angeschlossenen Kommunikationssystem (KS) übermittelten Antwortinformationen (ai) entsprechend dem im Datensatz (ds) angegebenen Interpretationsmodus interpretiert und visualisiert werden.

9. Service-Personalcomputer (SPC) zur Durchführung des erfindungsgemäßen Verfahren mit mindestens einer asynchronen Kommunikationsschnittstelle (V.24A) und einem Personalcomputer-Beriebssystem (DOS) sowie einem fenstertechnikorientierten Betriebssystem (WIN), wobei der Service-Personalcomputer (SPC) im Sinne eines Administrierens und Wartens von Kommunikationssystemen (KS) mit diesen lokal oder abgesetzt verbindbar ist und die Kommunikationssysteme (KS) durch betriebstechnische Parameter (p) enthaltende betriebstechnische Anweisungen (amo) administriert und gewartet werden,
- mit einer durch bedieneroberflächen-initialisierbare und - steuerbare, betriebstechnische Parameter (p) sowie betriebstechnische Anweisungen (amo) generier-und visulisierbare sowie die Kommunikation zu und von einem Kommunikationssystem (KS) initialisier- und steuerbare Benutzer-Programmodule (BPM) gebildeten Benutzer-Programmstruktur (B-PS),
- mit einer durch Programmodule (FVPM, NVPM) zur Kommunikationssystemfehler-und -Nachrichtenanzeige gebildeten Visualisierungs-Programmstruktur (V-PS),
- mit einer Betriebstechnik-Programmstruktur (BT-PS), in der
-- ein Anweisungs-Bearbeitungs-Programmodul (ATR) derart ausgestaltet ist,
--- daß von den Benutzer-Programmodulen (BPM) übermittelte betriebstechnische Parameter (p) überprüft sowie in betriebstechnische Anweisungen (amo) und einfügt und aus den von den Kommunikationssystemen (KS) übermittelten Antwortinformationen (ai) Informationen gelesen und an die Benutzer-Programmodule (BPM) gesteuert werden,
--- daß die Übermittlung jeder betriebstechnischen Anweisung (amo) bzw. Antwortinformation (ai) zu und von einem Kommunikationssystem (KS) gesteuert und überwacht wird, und
--- daß eine als Reaktion auf eine ausgesandte betriebstechnische Anweisung (amo) von einem Kommunikationssystem (KS) empfangene Antwortinformation (ai) bewertet und in Abhängigkeit von dem Informationsinhalt eine oder keine entsprechende betriebstechnische Reaktion eingeleitet wird,
-- ein die Kommunikation mit dem Kommunikationssystem (KS) über die Kommunikationsschnittstelle (V.24A) steuerndes und überwachendes Zugriffs-Programmodul (HA) und
-- ein eine im fenstertechnikorientierten Betriebssystem (WIN) realisierte Kommunikationsschnittstelle (V.24A) prozedural steuernde Kommunikationsschnittstellen-Programmodul (KW-PM) gebildet ist, und
- mit einer zumindest einen im fenstertechnikorientierten Betriebssystem (WIN) oder Personalcomputer-Betriebssystem (DOS) realisierten, asynchronen Kommunikationsschnittstellentreiber (V.24A) aufweisende Schaltungstechnik-Programmstruktur (HW-ST).

10. Service-Personalcomputer nach Anspruche 9,
dadurch gekennzeichnet,
daß in der Benutzer-Programmstruktur (B-PS)
- ein das bedieneroberflächengesteuerte Abfragen von betriebstechnischen Parametern (p) für administrative Funktionen in den Kommunikationssystemen (KS) bewirkende, betriebstechnische Anweisungen (amo) realisierendes Administrations-Programmodul (A-PM),
- ein das bedieneroberflächengesteuerte Abfragen von betriebstechnischen Parametern (p) für Wartungsfunktionen in den Kommunikationssystemen (KS) bewirkende, betriebstechnische Anweisungen (amo) realisierendes Wartungs-Programmodul (WAM), und
- ein das bedieneroberflächengesteuerte Abfragen von betriebstechnischen Parametern (p) für die Kommunikationssystemressourcen inbetriebnehmende, Kommunikationssystemdaten sichernde sowie Kommunikationssystem-Datenspeicher (MSP) und Dateien beeinflussende, betriebstechnische Anweisungen (amo) realisierendes Kommunikationssystem-Programmodul (KS-PM)
vorgesehen ist.

11. Service-Personalcomputer nach Anspruch 9 oder 10,
dadurch gekennzeichnet,
daß in die Benutzer-Programmstruktur (B-PS) zusätzlich ein eine Datenbasis (DB) eines Kommunikationssystems (KS) generierendes oder aktualisierendes oder Datenbasisdaten sammelndes Datenbasis-Programmodul (DB-PM) einfügbar ist.

12. Service-Personalcomputer nach einem der Ansprüche 9 bis 11,
dadurch gekennzeichnet,
daß in die Benutzer-Programmstruktur (B-PS) zusätzlich ein eine weitere externe Kommunikationsschnittstelle (V.24A') für die Kopplung von Service-Personalcomputern (SPC) und für den Anschluß von Datenverarbeitungsanlagen steuerndes externes Kommunikations-Programmodul (EK-PM) eingefügt ist.

13. Service-Personalcomputer nach einem der Ansprüche 9 bis 12,
dadurch gekennzeichnet,
daß in der Betriebstechnik-Programmstruktur (BT-PS) zusätzlich ein eine zusätzliche periphere Rechnerschnittstelle (SCSI) prozedural steuerndes Rechnerschnittstellen-Programmodul (SCSI-PM) vorgesehen ist.

14. Service-Personalcomputer nach einem der Ansprüche 9 bis 13,
dadurch gekennzeichnet,
daß in der Betriebstechnik-Programmstruktur (BT-PS) zusätzlich ein im Personalcomputer-Betriebssystem (DOS) realisiertes, eine synchrone Kommunikationsschnittstelle (V.24S) prozedural steuerndes Kommunikations-Programmodul (KPM) vorgesehen ist.

15. Service-Personalcomputer nach einem der Ansprüche 9 bis 14,
dadurch gekennzeichnet,
daß in der Schaltungstechnik-Programmstruktur (HW-ST) zusätzlich ein im Personalcomputer-Betriebssystem (DOS) realisierter, synchroner Kommunikationsschnittstellentreiber (V.24-ST) vorgesehen ist.

16. Service-Personalcomputer nach einem der Ansprüche 9 bis 15,
dadurch gekennzeichnet,
daß in der Schaltungstechnik-Programmstruktur (HW-ST) zusätzlich ein im Personalcomputer-Betriebssystem realisierter Rechnerschnittstellentreiber (SCSI-T) vorgesehen ist.
